(19) Europäisches Patentamt
European Patent Office
Office européen des brevets

(11) Numéro de publication : **0 274 488 B1**

# (12) FASCICULE DE BREVET EUROPEEN

(45) Date de publication du fascicule du brevet : **06.11.91 Bulletin 91/45**

(51) Int. Cl.[5] : **C08G 77/22**, H01M 6/18, H01B 1/04

(21) Numéro de dépôt : **87904276.0**

(22) Date de dépôt : **02.07.87**

(86) Numéro de dépôt international : **PCT/FR87/00261**

(87) Numéro de publication internationale : **WO 88/00215 14.01.88 Gazette 88/02**

## (54) NOUVELLES COMPOSITIONS A BASE DE DERIVES DE SILICE MODIFIEE PAR DES GROUPEMENTS ORGANIQUES, LEUR PREPARATION ET LEUR APPLICATION, NOTAMMENT COMME CONDUCTEURS CATIONIQUES.

(30) Priorité : **02.07.86 FR 8609602**

(43) Date de publication de la demande : **20.07.88 Bulletin 88/29**

(45) Mention de la délivrance du brevet : **06.11.91 Bulletin 91/45**

(84) Etats contractants désignés : **AT BE CH DE FR GB IT LI LU NL SE**

(56) Documents cités :
**EP-A- 0 099 440**
**WO-A-86/07185**
**AU-A- 421 571**
**US-A- 4 496 705**
**US-A- 4 512 905**

(73) Titulaire : **CENTRE NATIONAL DE LA RECHERCHE SCIENTIFIQUE**
**15, quai Anatole France**
**F-75007 Paris (FR)**

(72) Inventeur : **ARMAND, Michel**
**27, allée Maurice Ravel**
**F-38130 Echirolles (FR)**
Inventeur : **CHARBOUILLOT, Yves**
**Villemotier**
**F-01270 Coligny (FR)**
Inventeur : **HAMMOU, Abdelkader**
**44, avenue La Bruyère**
**F-38100 Grenoble (FR)**
Inventeur : **Ravaine, Denis**
**decede (FR)**

(74) Mandataire : **Nony, Michel et al**
**Cabinet NONY & CIE, 29, rue Cambacérès**
**F-75008 Paris (FR)**

EP 0 274 488 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention a pour objet de nouvelles compositions à base de dérivés de silice modifiée par des groupements organiques, leur préparation et leur application.

Les compositions de l'invention sont constituées de gels polymérisés qui se présentent sous la forme de solides amorphes analogues à des verres.

On sait que l'industrie de l'optique a constamment besoin d'élargir le choix des verres qu'elle est susceptible d'utiliser. Parmi les verres faisant actuellement l'objet de recherches, on mentionnera en particulier les compositions mixtes organique-inorganique qui peuvent être obtenues à l'état solide et former des verres légers.

On connaît par ailleurs l'intérêt des matériaux conducteurs ioniques solides, notamment dans la réalisation d'accumulateurs et de piles électrique ou de jauges d'activité spécifique entièrement solides, ou encore dans la réalisation de capteurs et de systèmes électrochromes.

On sait qu'à côté de la micro-électronique se constitue actuellement une branche de la technologie appelée "micro-ionique" qui développe les possibilités de miniaturisation de dispositifs utilisant le transport électrochimique des ions dans les conducteurs ioniques, en vue de réaliser par exemple des micro-capteurs, des micro-analyseurs, des micro-batteries, des afficheurs, ...

Jusqu'ici, les conducteurs ioniques proposés dans ces applications étaient principalement des produits cristallins ou des vitrocéramiques dont l'utilisation soulève en pratique des difficultés. On sait en effet que les produits cristallisés présentent des anomalies de dilatation qui rendent difficile leur utilisation. En outre, les céramiques ont une structure hétérogène caractérisée notamment par des joints de grains qui affectent les propriétés électriques et mécaniques, et qui diminuent la durée de vie des systèmes les utilisant comme électrolytes solides.

On conçoit donc l'intérêt des conducteurs ioniques solides amorphes, d'autant plus que leur préparation au départ de gels permet aisément de les obtenir sous la forme de couches minces.

La présente invention concerne de nouvelles compositions solides amorphes et homogènes, qui sont utilisables notamment dans l'industrie optique, électro-optique et électrochimique.

L'invention a plus précisément pour objet de nouvelles compositions à base de dérivés de silice modifiée par des groupements organiques, caractérisées par le fait que lesdits dérivés sont des solides amorphes répondant à la formule brute I

$$SiO_{2-0,5(x+y)}(Z^1)_x\,(Z^2)_y.\,(XA)_z \qquad (I)$$

dans laquelle :

$Z^1$ représente un groupement

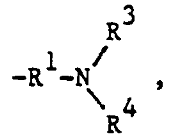

$R^1$ étant un alkylène ayant 3 à 8 atomes de carbone éventuellement interrompu par un groupement hétéroatomique -NH-, et $R^3$ et $R^4$ représentent chacun -H ou représentent ensemble un groupement -CH=CH-N=CH- ;

$Z^2$ représente un groupement $-R^2-SO_3H$, $R^2$ étant un alkylène ayant 3 à 8 atomes de carbone éventuellement interrompu par un groupement hétéroatomique -NH- ;

XA représente un acide (avec X=H) ou un sel de cet acide (avec X représentant une valence d'un métal), ledit acide ou ledit sel étant soluble dans l'eau ;

x est un nombre non nul inférieur ou égal à 1 ;

y est un nombre pouvant varier de 0 à 0,5 et non supérieur à x ;

x et y étant tels que la somme (x+y) soit supérieure ou égale à 1/3;

et z est un nombre éventuellement nul tel que le rapport $\frac{(z+y)}{x}$ soit supérieur à zéro et inférieur ou égal à 1 ;

étant entendu que la somme (x+y) est au plus égale à 1.

On voit que, dans la formule 1, lorsque $R^3$ et $R^4$ représentent ensemble un groupement -CH=CH-N=CH-, le groupement $-N(R^3)(R^4)$ est un groupement imidazolyle.

Le produit de base

$$SiO_{2-0,5(x+y)}(Z^1)_x\,(Z^2)_y$$

est dérivé de la silice, c'est-à-dire qu'il s'agit, comme la silice, d'un polymère tridimensionnel. On voit donc que

dans la formule 1, en moyenne, chaque atome de silicium est lié à x chaines

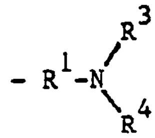

et y chaînes $-R^2 - SO_3H$. Dans le dérivé de silice de formule 1, en raison de tétravalence du silicium, chaque atome de silicium est donc en moyenne impliqué dans 2-0,5(x + y) liaisons du type Si-O-Si. L'acide ou le sel XA est solvaté dans le polymère de silice modifiée.

Bien entendu, les polymères dérivés de silice représentés par la formule brute I peuvent comporter, tout comme les xérogels de silice, une faible proportion de groupements terminaux hydroxyle. Cela résulte à l'évidence du mode de préparation des composés de formule I qui sera exposé ci-après.

L'invention concerne en particulier les produits de formule I pour lesquels la somme (x+y) est au moins égale à 0,5 et notamment ceux pour lesquels x est au moins égal à 0,5.

Parmi les produits de formule 1, on citera en particulier ceux pour lesquels le rapport $\frac{(z + y)}{x}$ est un nombre pouvant varier de 0,01 à 0,5.

Dans le cas où $R_1$ ne comporte pas d'hétéroatome d'azote, ce rapport est de préférence inférieur ou égal à 0,2 et peut varier notamment de 0,05 à 0,2.

Dans le cas où $R_1$ comporte un groupement hétéroatomique -NH-, ce rapport est de préférence inférieur ou égal à 0,4 et peut varier notamment de 0,1 à 0,4.

Dans des modes de réalisation particuliers, les compositions de l'invention peuvent encore présenter les caractéristiques suivantes prises isolément ou en combinaison :

– $Z^1$ représente un groupement $-(CH_2)_3NH_2$, $-(CH_2)_3-NH-(CH_2)_2-NH_2$;

– $Z^2$ représente un groupement $-(CH_2)_3-SO_3H$, $-(CH_2)_3NH(CH_2)_4SO_3H$;

– Le produit XA (ou $X^+A^-$) est un acide ou un sel dont l'anion $A^-$ est choisi par exemple parmi les anions suivants :

$Cl^-$, $Br^-$, $I^-$, $NO_3^-$, $C10_4^-$, $CF_3SO_3^-$, $SCN^-$, $BF_4^-$, $PF_6^-$, $AsF_6^-$, $CF_3CO_2^-$, $H_2PO_4^-$, $HSO_4^-$, $CH_3\ CO_2^-$,

– Lorsque X représente une valence d'un métal, il s'agit notamment d'un métal alcalin, du magnésium, d'un métal alcalino-terreux ou d'un métal de transition tel que le cuivre ou l'argent. Par exemple X représente Li, Na, K, 1/2 Mg, 1/2 Sr, 1/2 Ba, 1/2 Cu(II), Ag,

L'invention a également pour objet un procédé de préparation des compositions telles que définies précédemment.

Ce procédé est principalement caractérisé par le fait que l'on soumet un mélange des composés $Si(O\text{-}Alk)_4$, $Si(O\text{-}Alk)_3Z^1$ et $Si(O\text{-}Alk)_3Z^2$, Alk étant un groupement alkyle inférieur, présents respectivement dans les proportions (1-x-y), x et y (tels que définis précédemment) à l'action d'une solution aqueuse de l'acide ou du sel XA, l'eau de ladite solution représentant une quantité suffisante pour hydrolyser les groupements alkoxysilane des produits de départ en groupements silanol correspondant, la concentration de l'acide ou du sel XA, par rapport au silicium des produits de départ, étant égale à z tel que défini précédemment, et qu'après gélification du mélange réactionnel, on chauffe le gel obtenu, jusqu'à poids constant, à température supérieure à 100°C et inférieure à la température de décomposition du matériau obtenu.

Les silanes de départ, dans lesquels Alk représente par exemple méthyle, éthyle, isopropyle, etc..., sont des produits connus ou pouvant être préparés selon les méthodes connues ; voir par exemple W. Noll "Chemie und Technologie der Silicone" Verlag Chemie GmbH (1968).

Le procédé de l'invention est donc un procédé connu en soi sous la désignation de procédé de type sol-gel qui consiste, en partant d'une solution de dérivés organométalliques, à faire une réaction d'hydrolyse, suivie d'une gélification, la gélification correspondant à la polycondensation des groupement silanol obtenus pour former des liaisons du type Si-O-Si. Le passage du gel obtenu à un gel sec, c'est-à-dire exempt de solvants organiques, de produits de départ n'ayant pas réagi, et des autres produits réactionnels, est effectué dans une seconde étape à l'aide d'un traitement thermique approprié.

Le traitement thermique a notamment pour but d'éliminer les alcools (Alk-OH) formés lors de l'hydrolyse, ainsi que l'eau formée lors de la polycondensation des silanols. Ce traitement est effectué en atmosphère sèche, par exemple à 110-160°C, en particulier vers 120°C, sous pression réduite. On obtient alors un gel desséché ou "xérogel".

L'acide ou le sel XA ajouté reste solvaté dans le matériau final qui est stable jusqu'à des températures de

l'ordre de 180°C. Au-delà, le matériau commence à se décomposer par réactions d'oxydation.

Les matériaux finals ont généralement une densité de l'ordre de 1,3.

Ils ne sont que très faiblement poreux, leur surface spécifique mesurée par la méthode BET étant faible, généralement inférieure à 0,025m²/g.

Ces matériaux sont amorphes, comme le montre l'étude aux rayons X. Ils sont transparents, peu cassants, flexibles, et peuvent être obtenus facilement en films minces d'épaisseur inférieure par exemple à 100µm. En effet, le procédé de l'invention se prête aisément à l'obtention de la composition amorphe sous la forme d'une couche mince déposée sur un substrat approprié. Pour cela, on peut appliquer le mélange réactionnel, avant gélification, sur un substrat solide selon les méthodes connues, par exemple par centrifugeage, par trempage (ou "dipping") ou par le procédé pyrosol (entrainement de la solution réactionnelle, sous forme d'un brouillard, par un gaz vecteur, vers le substrat chauffé). Le traitement thermique est alors effectué sur le substrat revêtu de la couche de gel déposée.

Les compositions solides amorphes de l'invention présentent des propriétés optiques et électriques intéressantes.

En particulier, ces compositions ont une conductivité qui permet de les utiliser comme conducteurs ioniques. Cette conductivité est une conductivité cationique, due à la mobilité des protons de l'acide introduit (cas où X=H) ou des cations du sel introduit (dans le cas où XA est un sel métallique).

L'invention a également pour objet l'utilisation des compositions solides amorphes telles que définies ci-dessus, en particulier comme agents de transmission d'ondes électromagnétiques et/ou de courants électriques. Autrement dit, ces compositions peuvent être utilisées comme verres optiques et/ou comme électrolytes solides.

En particulier, ces compositions peuvent être utilisées comme électrolytes solides dans divers systèmes électrochimiques tels que générateurs ou piles électriques, capteurs, afficheurs électrochromes, etc...

Les exemples suivants illustrent l'invention sans toutefois la limiter.

EXEMPLE 1

Composition de formule I, avec $Z^1 = -(CH_2)_3-NH_2$, MA= $HC10_4$, x = 1, y = 0 et z = 0,1.

On mélange dans un Erlen-Meyer et dans l'ordre suivant :

- 0,36 cm³ d'acide perchlorique 70% (Prolabo Normapur)
- 4,4 cm³ d'eau distillée
- 10cm³ d'aminopropyltriéthoxysilane de formule

$(C_2H_5O)_3\,Si\text{-}(CH_2)_3\,NH_2$ (FLUKA AG)

L'Erlen-Meyer est fermé et placé sur un agitateur chauffant, à une température voisine de 60°C pendant 4 heures. La solution est alors transférée dans une boite de Petri en polycarbonate. Le tout est placé dans une étuve à 50°C où la gélification intervient en 3 ou 4 heures.

24 heures après gélification, le film est décollé du Petri et traité thermiquement à 120°C sous vide primaire pendant 48 heures de manière à éliminer l'eau résiduelle.

EXEMPLE 2

De façon analogue, les compositions $SiO_3/_2\,Z^1\,(HA)_z$ suivantes (tableau I) ont été synthétisées :

TABLEAU 1

| $Z^1$ | HA | z | | | | |
|---|---|---|---|---|---|---|
| $-(CH_2)_3NH_2$ | $HClO_4$ | 0,004 | 0,02 | 0,1 | 0,3 | 0,5 |
| | $HCF_3SO_3$ | 0,1 | | | | |
| | $HNO_3$ | 0,1 | | | | |
| | HCl | 0,1 | | | | |
| | $HCH_3CO_2$ | 0,1 | | | | |
| $-(CH_2)_3NH(CH_2)_2NH_2$ | $HClO_4$ | 0,1 | 0,2 | 0,4 | | |
| | $HCF_3SO_3$ | 0,1 | 0,2 | 0,4 | | |

EXEMPLE 3 :

Composition de formule $SiO_{1,5}(Z^1)_x(Z^2)_y$ dans laquelle $Z^1 = -(CH_2)_3NH_2$, $Z^2 = -(CH_2)_3\ NH(CH_2)_4SO_3H$, x = 0,9, y = 0,1 et z=0.

On mélange dans un Erlen-Meyer, 10cm³ d'aminopropyltriéthoxysilane (FLUKA AG) et 0,45cm³ de butane-sultone (Merck Normapur) de formule

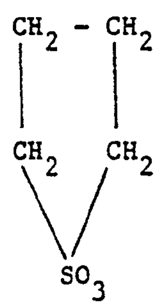

L'Erlen-Meyer est fermé et placé sur un agitateur chauffant à une température voisine de 60°C pendant 3 jours. L'augmentation de viscosité de la solution montre que la réaction $-NH_2 + (CH_2)_4SO_3 \rightarrow ... -NH(CH_2)_4SO_3H$ a eu lieu.

On ajoute alors successivement :

- 10cm³ de méthanol (Prolabo Normapur)
- 5cm³ d'eau distillée.

Le mélange obtenu est agité comme précédemment pendant 4 heures. La solution est transférée dans une boite de Pétri. La gélification et l'aspect du film après traitement thermique sont analogues à ceux décrits dans l'exemple 1.

EXEMPLE 4 :

Conductivité

Les compositions des exemples précédents ont fait l'objet d'une étude de la conductivité en fonction de la température. La conductivité a été mesurée par spectroscopie d'impédance complexe.

Les courbes obtenues font apparaître un régime dit de "volume libre" illustré par la figure 1 pour le cas où le matériau correspondant à la formule I avec $Z^1 = (CH_2)_3\text{-}NH_2$, HA = $HC10_4$, x = 1, y = 0 et z = 0,1. Les variations isothermes de conductivité avec la concentration en acide sont représentées sur la figure 2 pour HA = $HC10_4$.

Le tableau 2 ci-dessous donne les valeurs de conductivité à température ambiante pour différentes compositions ainsi que les pseudo-énergies d'activation, $E_a$ et les températures fictives de transition vitreuse To déduites par ajustement des points expérimentaux avec l'équation de Vogel-Tamman-Fulcher :

$$\sigma = A\, T^{-1/2} \exp\left[-\frac{E_a}{R(T-T_o)}\right]$$

dans laquelle :

- A est le terme préexponentiel, proportionnel à la concentration en porteurs de charges libres
- T représente la température (en K)
- R représente la constante des gaz parfaits ($R=8{,}314\ J.K.^{-1}\ mol^{-1}$).

TABLEAU 2

| $Z^1$ | HA | z | 25°C ($ohm^{-1}cm^{-1}$) | Ea (eV) | To (°C) | A ($ohm^{-1}cm^{-1}K^{\frac{1}{2}}$) |
|---|---|---|---|---|---|---|
| $-(CH_2)_3NH_2$ | $HClO_4$ | 0,004 | $1,1 . 10^{-7}$ | $6,41 . 10^{-2}$ | -86,4 | $1,53 . 10^{-3}$ |
| | | 0,02 | $6,7 . 10^{-7}$ | $7,64 . 10^{-2}$ | -93,2 | $2,13 . 10^{-2}$ |
| | | 0,1 | $4,9 . 10^{-6}$ | $9,18 . 10^{-2}$ | -85,5 | 1,32 |
| | | 0,3 | $9,8 . 10^{-7}$ | $8,88 . 10^{-2}$ | -59,3 | 3,00 |
| | $HCF_3SO_3$ | 0,1 | $1,4 . 10^{-5}$ | $8,69 . 10^{-2}$ | -85,5 | 1,19 |
| | | 0,125 | $9,0 . 10^{-6}$ | $9,54 . 10^{-2}$ | -88,4 | 2,75 |
| | $HNO_3$ | 0,1 | $1,0 . 10^{-5}$ | $7,74 . 10^{-2}$ | -85,7 | 0,61 |
| | HCl | 0,1 | $1,9 . 10^{-6}$ | $4,46 . 10^{-2}$ | -51,3 | $2,89 . 10^{-2}$ |
| | $HCH_3CO_2$ | 0,1 | $3,6 . 10^{-8}$ | $7,75 . 10^{-2}$ | -97,6 | $9,67 . 10^{-4}$ |
| 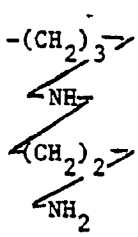 | $HClO_4$ | 0,2 | $8,4 . 10^{-6}$ | $9,94 . 10^{-2}$ | -81,0 | 7,87 |
| | | 0,4 | $2,2 . 10^{-6}$ | $8,57 . 10^{-2}$ | -59,8 | 4,90 |
| | $HCF_3SO_3$ | 0,2 | $8,2 . 10^{-6}$ | $9,19 . 10^{-2}$ | -77,0 | 5,04 |
| | | 0,4 | $2,7 . 10^{-6}$ | $8,94 . 10^{-2}$ | -64,1 | 5,29 |

EXEMPLE 5 :

Composition de formule I, avec

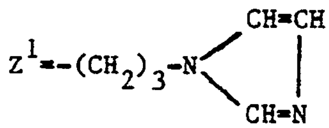

$XA=HCF_3SO_3$ x=1 y=0 et z=0,1.

On opère de façon analogue à celle décrite à l'exemple 1, au départ de 1cm³ de (triéthoxysilyl) propylimidazole et de 525µl d'une solution aqueuse d'acide trifluorométhanesulfonique à 0,7 mol/l.

EXEMPLE 6 :

Composition de formule I, avec

$$Z^1=-(CH_2)_3NH_2,\ MA=LiClO_4$$

x=1 y=0 et z=0,1.

On opère de façon analogue à celle décrite à l'exemple 1, au départ de 10cm³ d'aminopropyltriméthoxysilane, de 5cm³ d'eau distillée et de 0,602g de $LiC10_4$ anhydre.

**Revendications**

1. Composition à base de dérivés de silice modifiée par des groupements organiques, caractérisée par le fait que lesdits dérivés sont des solides amorphes répondant à la formule brute I

$$SiO_{2-0,5(x+y)}(Z^1)_x\,(Z^2)_y.\,(XA)_z \qquad (I)$$

dans laquelle :

$Z^1$ représente un groupement

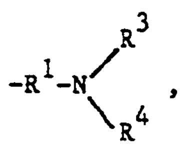

$R^1$ étant un alkylène ayant 3 à 8 atomes de carbone éventuellement interrompu par un groupement hétéroatomique -NH-, et $R^3$ et $R^4$ représentent chacun -H ou représentent ensemble un groupement -CH=CH-N=CH-,

$Z^2$ représente un groupement $-R^2-SO_3H$, $R^2$ étant un alkylène ayant 3 à 8 atomes de carbone éventuellement interrompu par un groupement hétéroatomique -NH- ;

XA est un acide (avec X=H) ou un sel de cet acide (avec X représentant un valence d'un métal), ledit acide ou ledit sel étant soluble dans l'eau ;

x est un nombre non nul inférieur ou égal à 1 ;

y est un nombre pouvant varier de 0 à 0,5 et non supérieur à x ;

x et y étant tels que la somme (x+y) soit supérieure ou égale à 1/3 ;

étant entendu que la somme (x+y) est au plus égale à 1 ;

et z est un nombre éventuellement nul tel que le rapport $\frac{(z+y)}{x}$ soit supérieur à zéro et inférieur ou égal à 1.

2. Composition selon la revendication 1, caractérisée par le fait que $Z^1$ représente un groupement $-(CH_2)_3NH_2$ ou $-(CH_2)_3-NH-(CH_2)_2-NH_2$.

3. Composition selon la revendication 1, caractérisée par le fait que $Z^1$ représente un groupement

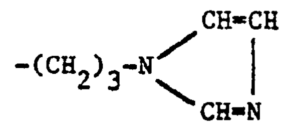

4. Composition selon l'une quelconque des revendications précédentes, caractérisée par le fait que X représente H ou une valence d'un métal alcalin, de magnésium, d'un métal alcalino-terreux ou d'un métal de transition tel que le cuivre ou l'argent.

5. Composition selon l'une quelconque des revendications précédentes, caractérisée par le fait que $Z^2$ représente un groupement $-(CH_2)_3-SO_3H$,ou $-(CH_2)_3-NH(CH_2)_4SO_3H$.

6. Composition selon l'une quelconque des revendications précédentes, caractérisée par le fait que la somme (x+y) est au moins égale à 0,5.

7. Composition selon l'une quelconque des revendications précédentes, caractérisée par le fait que x est au moins égal à 0,5.

8. Composition selon l'une quelconque des revendications précédentes, caractérisée par le fait que le rapport $\frac{(z+y)}{x}$ est un nombre pouvant varier de 0,01 à 0,5.

9. Composition selon la revendication 8, caractérisée par le fait que lorsque $R^1$ ne comporte pas de groupement hétéroatomique -NH-, le rapport $\frac{(z+y)}{x}$ est un nombre pouvant varier de 0,05 à 0,2.

10. Composition selon la revendication 8, caractérisée par le fait que lorsque $R^1$ comporte un groupement hétéroatomique -NH-, le rapport $\frac{(z+y)}{x}$ est un nombre pouvant varier de 0,1 à 0,4.

11. Composition selon l'une quelconque des revendications précédentes, caractérisée par le fait que XA est un acide ou un sel dont l'anion $A^-$ est choisi parmi les anions suivants : $Cl^-$, $Br^-$, $I^-$, $NO_3^-$, $C10_4^-$, $CF_3SO_3^-$, $SCN^-$, $BF_4^-$, $PF_6^-$, $AsF_6^-$, $CF_3CO_2^-$, $H_2PO_4^-$, $HSO_4^-$, $CH_3\ CO_2^-$.

12. Procédé de préparation d'une composition telle que définie dans l'une quelconque des revendications précédentes, caractérisé par le fait que l'on soumet un mélange des composés $Si(O\text{-}Alk)_4$, $Si(O\text{-}Alk)_3Z^1$ et $Si(O\text{-}Alk)_3Z^2$, Alk étant un groupement alkyle inférieur, présents respectivement dans les proportions (1-x-y), x et y, les nombres x et y étant définis comme dans la revendication 1, à l'action d'une solution aqueuse de l'acide ou du sel XA, l'eau de ladite solution représentant une quantité suffisante pour hydrolyser les groupements alkoxysilane des produits de départ en groupements silanol correspondant, la concentration de l'acide ou du sel XA, par rapport au silicium des produits de départ, étant égale à z tel que défini précédemment, et qu'après gélification du mélange réactionnel, on chauffe le gel obtenu, jusqu'à poids constant, à température supérieure à 100°C et inférieure à la température de décomposition du matériau obtenu.

13. Procédé selon la revendication 12, caractérisé par le fait que le groupement Alk est un groupement méthyle, éthyle ou isopropyle.

14. Utilisation d'une composition telle que définie dans l'une quelconque des revendications 1 à 11, comme agent de transmission des ondes électromagnétiques et/ou des courants électriques.

## Patentansprüche

1. zusammensetzung auf der Basis von Derivaten von mit organischen Gruppen modifizierter Kieselsäure, **dadurch gekennzeichnet**, daß die Derivate amorphe Festkörper sind, die der Bruttoformel I entsprechen,

$$SiO_{2-0,5(x+y)}\,(Z^1)_x\,(Z^2)_y \cdot (XA)_z \qquad (I),$$

in der bedeuten:

$Z^1$ eine Gruppe

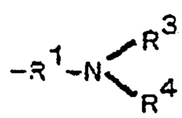 ,

wobei

$R^1$ eine Alkylengruppe mit 3 bis 8 Kohlenstoffatomen, die ggf. durch eine Heteroatomgruppe -NH- unterbrochen ist, darstëllt und $R^3$ und $R^4$ jeweils.-H oder zusammen eine Gruppierung -CH=CH-N=CH darstellen,

$Z^2$ eine Gruppe $-R^2-SO_3H$, wobei $R^2$ eine Alkylengruppe mit 3 bis 8 Kohlenstoffatomen darstellt, die gegebenenfalls durch eine Heteroatomgruppe -NH- unterbrochen ist,

XA eine Säure (mit X=H) oder ein Salz dieser Säure (wobei X ein Äqnivalent eines Metalls darstellt), wobei diese Säure oder dieses Salz wasserlöslich sind,

x eine Zahl ungleich Null und kleiner oder gleich 1,

y eine Zahl, die von 0 bis 0,5 variieren kann und die nicht größer ist als x, wobei

x und y so gewählt werden, daß die Summe x+y größer oder gleich 1/3 ist,

mit der Maßgabe, daß die Summe x+y höchstens gleich 1 ist, und

z eine zahl, die gegebenenfalls gleich Null ist und einen solchen Wert hat, daß das Verhältnis $\frac{z+y}{x}$ größer als Null und kleiner oder gleich 1 ist.

2. Zusammensetznng nach Anspruch 1, dadurch gekennzeichnet, daß $Z^1$ eine Gruppe $-(CH_2)_3NH_2$ oder $-(CH_2)_3-NH-(CH_2)_A-NH_2$ darstellt.

3. ZusammensetzUng nach Ansprnch 1, dadurch gekennzeichnet, daß $Z^1$ eine Gruppe

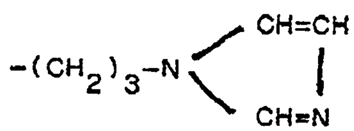

darstellt.

4. Zusammensetzung nach einem der vorhergehenden Ansprüche, dadurch gekennzeichnet, daß X H oder ein Äquivalent eines Alkalimetalls, eines Erdalkalimetalls einschließlich Magnesium oder eines Übergangsmetalls wie Kupfer oder Silber darstellt.

5. Zusammensetzung nach einem der vorhergehenden Ansprüche, dadurch gekennzeichnet, daß $Z^2$ eine Gruppe $-(CH_2)_3-SO_3H$ oder $-(CH_2)_3-NH(CH_2)_4SO_3H$ darstellt.

6. Zusammensetzung nach einem der vorhergehenden Anspruche, dadurch gekennzeichnet, daß die Summe x+y mindestens gleich 0,5 ist.

7. Zusammensetzung nach einem der vorhergehenden Ansprüche, dadurch gekennzeichnet, daß x mindestens gleich 0,5 ist.

8. Zusammensetzung nach einem der vorhergehenden Ansprüche, dadurch gekennzeichnet, daß das Verhältnis $\frac{z+y}{x}$ eine zahl ist, die von 0,01 bis 0,5 variieren kann.

9. Zusammensetzung nach Anspruch 8, dadurch gekennzeichnet, daß, wenn $R^1$ keine Heteroatomgruppe -NH- enthält, das Verhältnis $\frac{z+y}{x}$ eine Zahl ist, die von 0,05 bis 0,2 variieren kann.

10. Zusammensetzung nach Anspruch 8, dadurch gekennzeichnet, daß, wenn $R^1$ eine Heteroatomgruppe -NH- enthält, das Verhältnis $\frac{z+y}{x}$ eine zahl ist, die von 0,1 bis 0,4 variieren kann.

11. Zusammensetzung nach einem der vorhergehenden Ansprüche, dadurch gekennzeichnet, daß XA eine Säure oder ein Salz ist, dessen Anion $A^-$ unter einem der folgenden Anionen ansgewählt ist:

$Cl^-$, $Br^-$, $I^-$, $NO_3^-$, $C10_4^-$, $CF_3SO_3^-$, $SCN^-$, $BF_4^-$, $PF_6^-$, $AsF_6^-$, $CF_3CO_2^-$, $H_2PO_4^-$, $HSO_4^-$, $CH_3\,CO_2^-$.

12. Verfahren zur Herstellung einer Zusammensetzung nach einem der vorhergehenden Ansprüche, dadurch gekennzeichnet, daß man auf ein Gemisch der Verbindungen $Si(O-Alk)_4$, $Si(O-Alk)_3Z^1$ und $Si(O-Alk)_3Z^2$, wobei Alk eine niedere Alkylgruppe ist, die in den Mengen 1-x-y, x beziehungsweise y vorliegen, wobei die Zahlen x und y wie in Anspruch 1 definiert sind, eine wäßrige lösung einer Säure oder eines Salzes XA einwirken läßt, wobei. die Wassermenge der Lösung ausreichend ist, um die Alkoxysilangruppen der Ausgangsstoffe zu den entsprechenden Silanolgruppen zu hydrolysieren, wobei die Konzentration der Säure oder des Salzes XA, bezogen auf das Silicum der Ansgangsstoffe, gleich dem oben definierten z ist, und daß man nach Gelbildung des Reaktionsgemisches das erhaltene Gel bei einer Temperatur über 100 °C und unter der 2ersetzungstemperatur des erhaltenen materials bis zur Gewichtskonstanz erwärmt.

13. Verfahren nach Anspruch 12, dadurch gekennzeichnet, daß die Gruppe Alk Methyl, Ethyl oder Isopropyl ist.

14. Verwendung einer zusammensetzung nach einem der Ansprüche 1 bis 11 als Übertragungsmittel für

elektromagnetische Wellen und/oder elektrische Ströme.

## Claims

1. Composition based upon silica derivatives modified by organic groups, characterized by the fact that said derivatives are amorphous solids having the general formula I

$$S10_{2-0.5(x+y)}(Z^1)_x (Z^2)_y . (XA)_z \qquad (I)$$

in which:

$Z^1$ represents a group

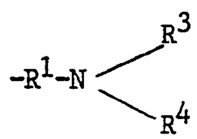

,

where $R^1$ is an alkylene having from 3 to 8 carbon atoms, possibly interrupted by a -NH-heteroatomic group, and $R^3$ and $R^4$ each represent -H or together represent a -CH=CH-N=CH- group,

$Z^2$ represents a $-R^2-SO_3H$ group, where $R^2$ is an alkylene having from 3 to 8 carbon atoms, possibly interrupted by a -NH-heteroatomic group;

XA is an acid (with X=H) or a salt of this acid (with X representing a valency of a metal), said acid or said salt being soluble in water;

x is a non-zero number less than or equal to 1;

y is a number which can vary from 0 to 0.5 and is not greater than x;

x and y being such that the sum (x + y) shall be greater than or equal to 1/3;

it being understood that the sum (x + y) is at most equal to 1;

and z is a possibly zero number such that the ratio $\frac{(z+y)}{x}$ shall be greater than zero and less than or equal to 1.

2. Composition according to Claim 1, characterized by the fact that $Z^1$ represents a $-(CH_2)_3NH_2$ group or $-(CH_2)_3-NH-(CH_2)_2-NH_2$ group.

3. Composition according to Claim 1, characterized by the fact that $Z^1$ represents a group

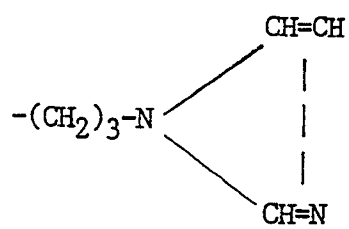

4. Composition according to any one of the preceding Claims, characterized by the fact that X represents H or a valency of an alkali metal, of magnesium, of an alkaline-earth metal or of a transition metal such as copper or silver.

5. Composition according to any one of the preceding Claims, characterized by the fact that $Z^2$ represents a $-(CH_2)_3-SO_3H$ group or $-(CH_2)_3-NH(CH_2)_4SO_3H$ group.

6. Composition according to any one of the preceding Claims, characterized by the fact that the sum (x + y) is at least equal to 0.5.

7. Composition according to any one of the preceding Claims, characterized by the fact that x is at least equal to 0.5.

8. Composition according to any one of the preceding Claims, characterized by the fact that the ratio $\frac{(z+y)}{x}$ is a number wich can vary from 0.01 to 0.5.

9. Composition according to Claim 8, characterized by the fact that where $R^1$ does not comprise a -NH-heteroatomic group, the ratio $\frac{(z+y)}{x}$ is a number which can vary from 0.05 to 0.2.

10. Composition according to Claim 8, characterized by the fact that where $R^1$ comprises a -NH- heteroatomic group, the ratio $\frac{(z + y)}{x}$ is a number which can vary from 0.1 to 0.4.

11. Composition according to any one of the preceding Claims, characterized by the fact that XA is an acid or a salt, of which the anion $A^-$ is chosen from among the following anions:

$Cl^-$, $Br^-$, $I^-$, $NO_3^-$, $ClO_4^-$, $CF_3SO_3^-$, $SCN^-$, $BF_4^-$, $PF_6^-$, $AsF_6^-$, $CF_3CO_2^-$, $H_2PO_4^-$, $HSO_4^-$, $CH_3CO_2^-$.

12. Process for the preparation of a composition as defined in any one of the preceding Claims, characterized by the fact that a mixture of the compounds $Si(O\text{-}Alk)_4$, $Si(O\text{-}Alk)_3Z^1$ and $Si(O\text{-}Alk)_3Z^2$, where Alk is a lower alkyl group, these compounds being present respectively in the proportions (1-x-y), x and y, the numbers x and y being defined as in Claim 1, is subjected to the action of an aqueous solution of the acid or the salt XA, the water of said solution representing a sufficient quantity for hydrolysing the alkoxy silane groups of the starting products to corresponding silanol groups, the concentration of the acid or of the salt XA, in proportion to the silicon of the starting products,being equal to z as defined above, and that after gelling of the reaction mixture, the gel obtained is heated to a constant weight at a temperature greater than 100°C and less than the decomposition temperature of the material obtained.

13. Process according to Claim 12, characterized by the fact that the Alk group is a metal, ethyl or isopropyl group.

14. Use of a composition as defined in any one of Claims 1 to 11 as transmission agent for electromagnetic waves and/or electric currents.

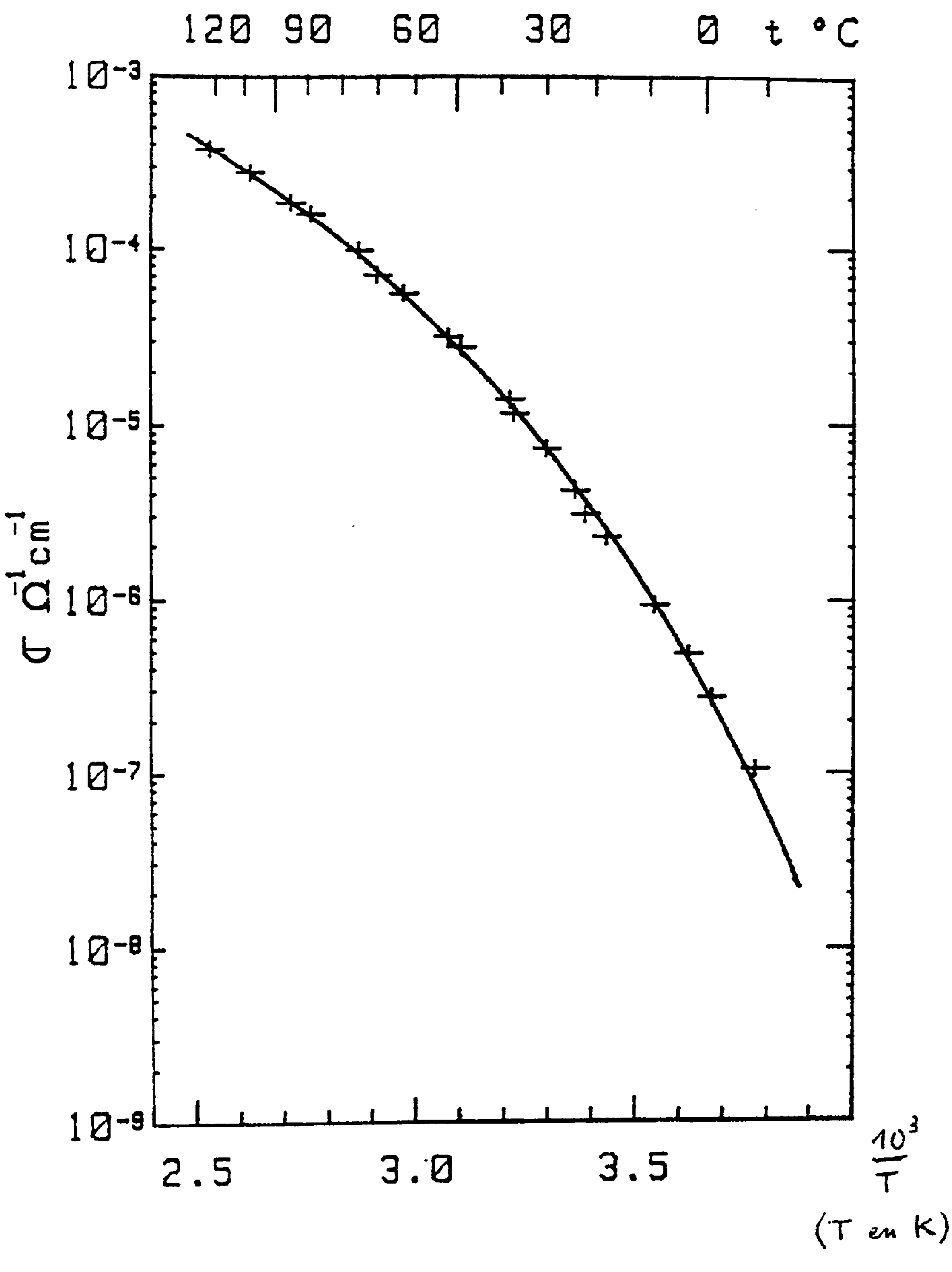


Figure 1 : Diagramme d'Arrhénius pour $SiO_{3/2}\left[(CH_2)_3NH_2\right]$ $(HClO_4)_{0,1}$

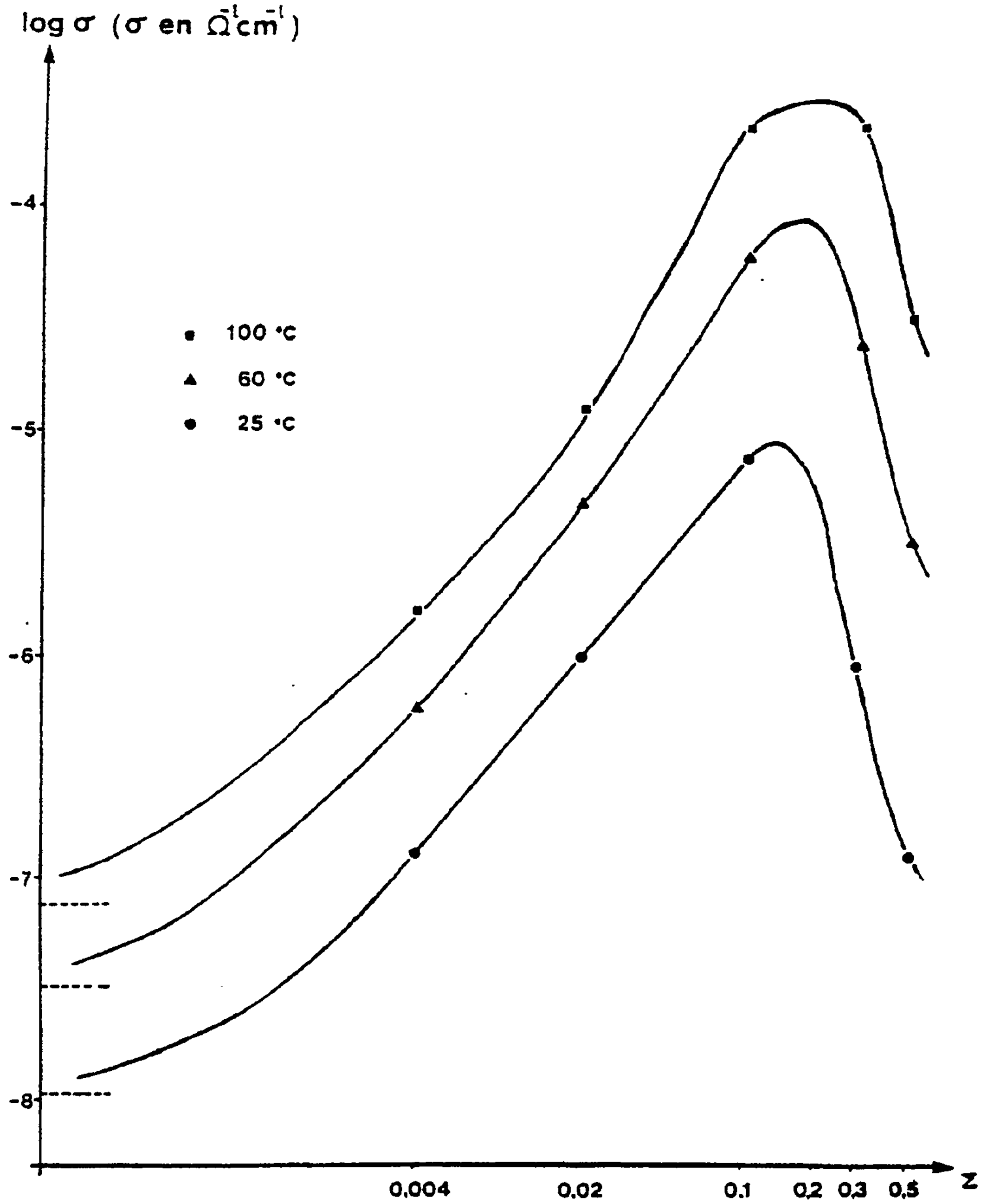


Figure 2 : Isothermes conductivité-composition de $SiO_{3/2}\left[(CH_2)_3NH_2\right](HClO_4)_z$